# EUROPÄISCHE PATENTSCHRIFT

(11) **EP 1 754 026 B1**
(45) Veröffentlichungstag und Bekanntmachung des Hinweises auf die Patenterteilung: **09.02.2011**
(21) Anmeldenummer: 05776235.3
(22) Anmeldetag: 01.06.2005
(51) Int. Cl.: G01F 1/66

(54) **VERFAHREN UND VORRICHTUNG ZUM MESSEN DER STRÖMUNGSGESCHWINDIGKEIT VON FLUIDEN**
METHOD AND DEVICE FOR MEASURING THE FLOWING SPEED OF FLUIDS
PROCEDE ET DISPOSITIF POUR MESURER LA VITESSE D'ECOULEMENT DE FLUIDES

(30) Priorität: 08.06.2004 DE 102004027958
(43) Veröffentlichungstag der Anmeldung: 21.02.2007
(73) Patentinhaber: M & FC Holding LLC, Raleigh, NC 27 615 (US)
(72) Erfinder: SCHÄFER, Burghard, 67112 Mutterstadt (DE)
(74) Vertreter: Patentanwälte Möll, Bitterich & Dr. Keller
(86) Internationale Anmeldenummer: PCT/EP2005/005894
(87) Internationale Veröffentlichungsnummer: WO 2005/121711

(56) Entgegenhaltungen:
- EP-A- 0 686 832
- DE-A1- 19 530 054
- US-A- 4 480 485
- US-A- 5 117 698

## Beschreibung

### Technisches Gebiet

Die Erfindung betrifft Verfahren zum Messen der Strömungsgeschwindigkeit von Fluiden nach dem Laufzeitendifferenzverfahren gemäß dem Oberbegriff des Anspruchs 1. Sie betrifft ferner eine Vorrichtung zur Durchführung des Verfahrens.

### Stand der Technik

Die Messung der Strömungsgeschwindigkeit von Fluiden durch Messen der Laufzeiten von Ultraschallsignalen mit der Strömung und gegen die Strömung mit anschließender Differenzbildung ist bekannt. Man vergleiche die DE 195 30 054 C, die DE 103 28 662 A, die DE 33 31 531 C oder die DE 33 31 519 C. Diese Schriften beschreiben unterschiedliche Verfahren, mit deren Hilfe die Probleme gelöst werden sollen, die durch die Abhängigkeit der momentanen Schallgeschwindigkeit von Temperatur und Druck oder durch Reflexionen der Ultraschallwelle an den Wänden der Messstrecke oder an Festkörpern oder Luftblasen im Fluid entstehen.

Die exakte Laufzeitmessung wird auch dadurch erschwert, dass die Ultraschallschwinger selbst aufgrund ihrer mechanischen Trägheit langsam ein- und ausschwingen, wodurch das Empfangssignal zusätzlich verzerrt wird.

### Darstellung der Erfindung

Der vorliegenden Erfindung liegt die Aufgabe zugrunde, ein Verfahren der eingangs genannten Art anzugeben, welches in der Lage ist, sich an Änderungen der Schallgeschwindigkeit adaptiv anzupassen und Störungen auszublenden.

Diese Aufgabe wird gelöst durch ein Verfahren mit den Merkmalen des Anspruchs 1.

Das vorliegende Verfahren misst in einem ersten Vorgang die Zeitdauer, die zwischen dem Aussenden des Ultraschallsignals und dem Auftreten eines beliebigen, hier des k-ten Pulses des Empfangssignals vergeht. Dabei wird der Sendewandler mit einer Pulsfolge aus n Impulsen (n ≥ 1), genannt Burst, angeregt. Diese erste Messung erfolgt vorteilhafterweise in Strömungsrichtung. Anschließend wird die Messtrecke mit einem identischen Ultraschallsignal in Gegenrichtung durchstrahlt, wobei Sende- und Empfangswandler ihre Funktion tauschen. Auch die damit verbundene zweite Zeitmessung beginnt mit der Aussendung des Ultraschallsignals und endet mit dem Empfang des k-ten Empfangspulses. Die Aufgabe, im zweiten Empfangssignal wiederum genau den dem ersten Empfangssignal entsprechenden k-ten Puls auszuwählen, wird dadurch gelöst, dass die Empfangsschaltung erst aktiv geschaltet wird, nachdem eine Torzeit abgelaufen ist, die mit der im ersten Messvorgang ermittelten Zeitdauer fest verknüpft ist.

Dadurch, dass während des zweiten Messvorgangs die Messschaltung zunächst abgeschaltet bleibt, können während dieser Zeit auftretende Störschallpulse die Messung nicht stören.

Aufgrund der Tatsache, dass die Torzeit mit der im ersten Messvorgang ermittelten Zeitdauer fest verknüpft ist, werden Änderungen der Schallgeschwindigkeit, die im Laufe der Zeit oder durch Druck-, Temperatur- oder Dichteänderungen des Fluids entstehen, adaptiv ausgeglichen, ohne dass es einer besonderen Adaptionsschaltung bedarf.

Gemäß einer ersten Ausgestaltung der Erfindung ist die Torzeit gleich der beim ersten Messvorgang ermittelten Zeitdauer.

Gemäß einer bevorzugten Weiterbildung wird zur Bildung der Torzeit die erste gemessene Zeitdauer um einen festen Betrag verkürzt, der kleiner ist als eine Periodendauer der Anregungspulse. Das bedeutet, dass die Messschaltung um diese kurze Zeitspanne früher aktiviert wird. Dadurch wird es möglich, auch bei einer Strömungsgeschwindigkeit gleich Null, bei der die Schalllaufzeiten in Vorwärts- und Rückwärtsrichtung identisch sind, während des zweiten Messvorgangs den k-ten Impuls exakt zu erfassen.

Gemäß einer bevorzugten Ausgestaltung entspricht der Betrag der Verkürzung der Torzeit einem Achtel der Periodendauer.

Obwohl es grundsätzlich bedeutungslos ist, mit welchem der Anregungspulse die jeweilige Messung in Vorwärts- und Rückwärtsrichtung beginnt, empfiehlt es sich, diese Messung entweder beim ersten oder beim letzten Puls zu starten. Dadurch wird die Messschaltung besonders einfach.

Einen minimalen, gleichwohl nicht völlig zu vernachlässigenden Einfluss auf die Messgenauigkeit hat die Auswahl des k-ten Pulses im jeweiligen Empfangssignal. Vorteilhafterweise wird als k-ter Puls der Puls gewählt, bei dem der analoge Wellenzug entweder die größte Amplitude oder noch besser die größte Flankensteilheit im Nulldurchgang bzw. an der Diskriminatorschwelle aufweist.

Statt die beiden Laufzeiten in Vorwärts- und Rückwärtsrichtung zu messen und anschließend die Differenz zu bilden, kann auch die Zeit zwischen dem Ende der Torzeit und dem k-ten Puls des zweiten Messvorgangs direkt gemessen werden. Diese Zeit, von der gegebenenfalls die feste Zeitspanne abgezogen werden muss, um die die Torzeit verkürzt ist, entspricht genau der Laufzeitdifferenz der Ultraschallsignale in Vorwärts- und Rückwärtsrichtung. Aus ihr lässt sich die Strömungsgeschwindigkeit und aus der Strömungsgeschwindigkeit die Durchflussmenge des Fluids ohne weiteres errechnen.

Gegenstand der vorliegenden Erfindung ist ferner eine Vorrichtung, mit der sich das zuvor beschriebene Verfahren und seine Ausgestaltungen und Varianten durchführen lassen. Eine solche Vorrichtung ist Gegenstand des Anspruchs 11.

### Kurze Beschreibung der Zeichnungen

Anhand der Zeichnung sollen das erfindungsgemäße Messverfahren und eine dazu verwendbare Messschaltung näher erläutert werden.

### Wege zur Ausführung der Erfindung und gewerbliche Verwertbarkeit

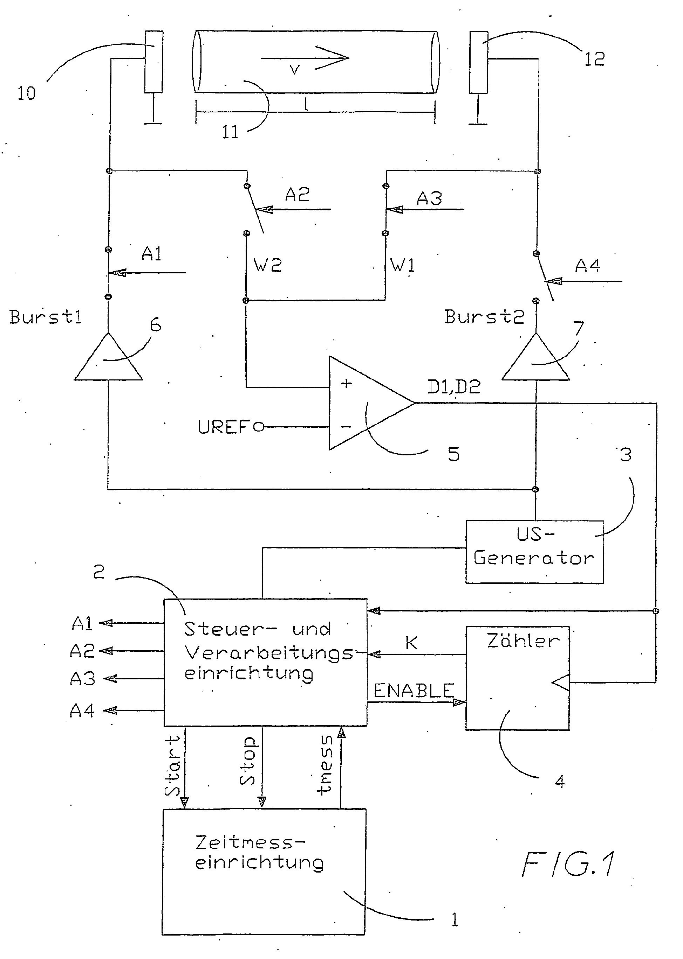

Fig. 1 zeigt eine von einem Fluid mit der Geschwindigkeit v durchströmte Ultraschall-Messstrecke 11, an deren Anfang ein Ultraschall-Sendewandler 10 und an deren Ende ein Ultraschall-Empfangswandler 12 angeordnet sind. Ein Ultraschall-Generator 3 erzeugt hochfrequente Ultraschall-Impulse. Eine auf n (n ≥ 1) begrenzte Zahl dieser Ultraschall-Impulse (Burst 1) wird über einen Schalter A1 auf den Sendewandler 10 geschaltet. Dieser wandelt sie in Ultraschallschwingungen um, die die Messtrecke 11 durchlaufen und vom Empfangswandler 12 in einen analogen Signalzug (W1) umgewandelt werden. Dieser liegt über einen Schalter A3 am einen Eingang eines als Verstärker und Komparator geschalteten Operationsverstärkers 5, dessen zweitem Eingang eine Referenzspannung U_{ref} zugeführt ist. Am Ausgang des Operationsverstärkers 5 erscheint ein entsprechendes Rechtecksignal D1, welches auf einen Zähler 4 gegeben wird. Dieser zählt die Pulse des Signalzugs D1. Sobald der k-te Puls gezählt wurde, gibt der Zähler 4 ein Stoppsignal an eine Steuer- und Verarbeitungseinrichtung 2.

Die Steuer- und Verarbeitungseinrichtung 2 ist mit einer Zeitmesseinrichtung 1 verbunden, die bei Beginn des soeben erläuterten Messvorgangs eingeschaltet und mit dem k-ten Puls abgeschaltet wird. Die dazwischen abgelaufene Zeitdauer T1 wird in der Steuer- und Verarbeitungseinrichtung 2 zwischengespeichert.

Anschließend werden die Schalter A1, A2, A3, A4 umgeschaltet, so dass der bisherige Empfangswandler 12 zum Sendewandler, der bisherige Sendewandler 10 zum Empfangswandler wird. Anschließend gibt der Ultraschallgenerator 3 wieder eine auf die selbe Anzahl n (n ≥ 1) begrenzte Anzahl von Anregungspulsen an den Wandler 12, worauf der Wandler 10 einen analogen Signalzug (W2) über den Umschalter A2 an den Operationsverstärker 5 abgibt. Der an dessen Ausgang erscheinende Pulszug D2 wird wieder auf den Zähler 4 gegeben.

Während des zweiten Messvorgangs hat die Steuer- und Verarbeitungseinrichtung 2 mit dem Enable-Eingang den Zähler 4 für eine bestimmte Torzeit T_{gate} abgeschaltet. Die Torzeit T_{gate} ist mit der im ersten Messvorgang ermittelten Zeit T1 fest gekoppelt. Dabei kann die Torzeit T_{Gate} mit der ersten Zeitdauer T1 identisch oder vorzugsweise gegenüber dieser um einen festen Betrag T_{Subgate} verkürzt sein.

Sobald die aktuelle Torzeit T_{Gate} abgelaufen ist, schaltet die Steuer- und Verarbeitungseinrichtung 2 über den Enable-Eingang den Zähler 4 aktiv. Dieser erkennt den darauf folgenden ersten Puls des Pulszugs D2 als den k-ten Puls und gibt ein entsprechendes Stoppsignal an die Steuer- und Verarbeitungseinrichtung 2, die ihrerseits die Zeitmesseinrichtung 1 stoppt. Diese gibt die gemessene Zeit als zweite Zeitdauer T2 an die Steuer- und Verarbeitungseinrichtung 2. Diese bildet aus der ersten und zweiten Zeitspanne T1, T2 die Differenz ΔT, aus der dann wie bekannt die Strömungsgeschwindigkeit v und aus dieser die Durchflussmenge des Fluids durch die Messstrecke 11 errechnet werden kann.

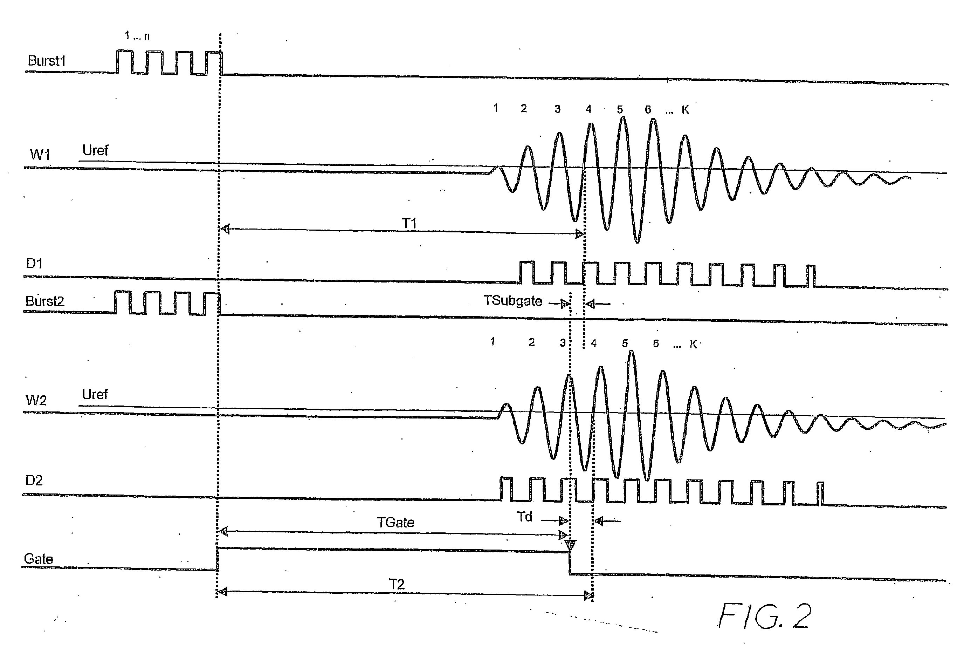

Fig. 2 zeigt die entsprechenden Pulsdiagramme.

In der ersten Zeile erkennt man die Anregungssignale (Burst 1) für den Ultraschall-Sendewandler 10. Mit dem letzten Puls beispielsweise beginnt die Messung der ersten Zeitdauer T1.

In der zweiten Zeile ist der analoge Signalzug W1 am Ausgang des Ultraschall-Empfangswandler 12 dargestellt. Dessen Einhüllende hat aufgrund der Ein- und Ausschwingvorgänge der Wandler 10, 12 eine Glockenform.

In der dritten Zeile ist der im Komparator 5 erzeugte digitale Impulszug D1 dargestellt. Dessen Pulse werden vom Zähler 4 gezählt, der beim Erkennen des k-ten Pulses über die Steuer- und Verarbeitungseinrichtung 2 die Zeitmesseinrichtung 1 stoppt. Dadurch ist die Zeitdauer T1 ermittelt, die ein Maß für die Laufzeit des Ultraschallsignals vom Sendewandler 10 zum Empfangswandler 12 darstellt.

In der darauffolgenden Zeile sind die Anregungspulse (Burst 2) für den jetzt als Sendewandler geschalteten Wandler 12 dargestellt. Mit dem Ende des letzten Anregungspulses beginnt die Messung der zweiten Zeitdauer T2. Die vom Wandler 12 ausgesandte Ultraschallwelle erzeugt am Wandler 10 einen analogen Signalzug W2, der im Komparator 5 zu einem digitalen Pulszug D2 umgewandelt wird.

Der Pulszug D2 wird an den Zähler 4 geschaltet. Dieser ist jedoch zunächst deaktiviert, und zwar für die Torzeit T_{Gate}. Erst nach dem Ende der Torzeit T_{Gate} wird der Zähler 4 aktiviert. Dieser erkennt den nächsten einlaufenden Puls des Pulszuges D2 als den k-ten Puls und gibt ein entsprechendes Stoppsignal an die Steuer- und Verarbeitungseinrichtung 2. Diese stoppt wie erwähnt die Zeitmesseinrichtung 1 und liest die gemessene Zeit als Zeitdauer T2 aus.

War der erste Messvorgang in Strömungsrichtung, der zweite Messvorgang gegen die Strömungsrichtung durchgeführt worden, so ist T2 größer als T1 und die Laufzeitdifferenz ΔT = T2 - T1. Aus der Laufzeitdifferenz ΔT wird dann nach den bekannten Formeln die Strömungsgeschwindigkeit v und daraus wieder die Durchflussmenge des Fluids durch die Messstrecke 11 ermittelt.

Wie Fig. 2 erkennen lässt, steht die Torzeit T_{Gate} mit der im ersten Messvorgang ermittelten Zeitdauer T1 in einem festen Zusammenhang. Dieser Zusammenhang besteht darin, dass von der Zeitdauer T1 ein fester Betrag, hier T_{subgate} genannt, abgezogen ist. T_{Subgate} ist kleiner als eine Periodendauer des Ultraschallsignals. Ein Achtel der Periodendauer hat sich als vorteilhaft herausgestellt.

Durch die feste Verkürzung der Torzeit T_{Gate} gegenüber der ersten gemessenen Zeitdauer T1 wird sichergestellt, dass auch bei der Durchflussgeschwindigkeit v = 0 der k-te Puls im zweiten Messvorgang sicher erkannt werden kann.

## Patentansprüche

1. Verfahren zum Messen der Strömungsgeschwindigkeit (v) von Fluiden nach dem Laufzeitendifferenzverfahren, umfassend die Merkmale:
- Durchstrahlen einer Ultraschall-Messstrecke (11) zwischen zwei UltraschallWandlern (10, 12) in Vorwärtsrichtung,
- dazu Anregen des Sendewandlers (10) mit einer auf n (n ≥ 1) begrenzten Anzahl von Anregungsimpulsen (Burst 1) zur Aussendung eines Ultraschall-Wellenzuges,
- Aufnehmen des Ultraschall-Wellenzuges vom Empfangswandler (12) als analoger Signalzug (W1),
- Digitalisieren des Signalzugs (W1) zu einem Pulszug (D1),
- und Messen einer ersten Zeitdauer (T1) zwischen einem bestimmten Puls der Anregungsimpulse (Burst 1) und einem k-ten (k>1) Puls des Pulszugs (D1),
**gekennzeichnet durch** die Merkmale:
- Anregen des Empfangswandlers (12) mit einer auf n begrenzten Anzahl von frequenzgleichen Anregungspulsen (Burst 2) zur Aussendung eines Ultraschall-Wellenzugs,
- Aufnehmen des Ultraschall-Wellenzugs vom Sendewandler (10) als analoger Signalzug (W2),
- Digitalisieren des Signalzugs (W2) zu einem Pulszug (D2),
- Messen einer zweiten Zeitdauer (T2) zwischen einem bestimmten Puls der Anregungsimpulse (Burst 2) und dem ersten Puls des Pulszugs (D2), der nach Ablauf einer mit der ersten Zeitspanne (T1) in einem festen Zusammenhang stehenden Torzeit (T_{Gate}) detektiert wird,
- Bilden der Zeitdifferenz (ΔT) zwischen der ersten und zweiten Zeitdauer (T1, T2),
- Berechnen der Strömungsgeschwindigkeit (v) mit Hilfe der ermittelten Zeitdifferenz (ΔT).

2. Verfahren nach Anspruch 1, **gekennzeichnet durch** das Merkmal:
- die Torzeit (T_{Gate}) ist gleich der gemessenen ersten Zeitdauer (T1).

3. Verfahren nach Anspruch 1, **gekennzeichnet durch** das Merkmal:
- zur Bildung der Torzeit (T_{Gate}) wird die erste gemessene Zeitdauer (T1) um einen Betrag (T_{subgate}) verkürzt, der kleiner ist als eine Periodendauer der Anregungspulse (Burst 1, Burst 2).

4. Verfahren nach Anspruch 3, **gekennzeichnet durch** das Merkmal:
- der Betrag (T_{subgate}) der Verkürzung entspricht einem Achtel der Periodendauer.

5. Verfahren nach einem der Ansprüche 1 bis 4, **gekennzeichnet durch** das Merkmal:
- die Messungen der ersten und zweiten Zeitdauer (T1, T2) beginnen mit dem jeweils selben Puls der Anregungsimpulse (Burst 1, Burst 2).

6. Verfahren nach Anspruch 5, **gekennzeichnet durch** das Merkmal:
- die Messungen beginnen mit dem ersten oder letzten Puls der Anregungsimpulse (Burst 1, Burst 2).

7. Verfahren nach einem der Ansprüche 1 bis 6, **gekennzeichnet durch** das Merkmal:
- als k-ter Puls des Pulszugs (D1) wird der Puls gewählt, bei dem der analoge Wellenzug (W1) die größte Amplitude aufweist.

8. Verfahren nach einem der Ansprüche 1 bis 6, **gekennzeichnet durch** das Merkmal:
- als k-ter Puls des Pulszugs (D1) wird der Puls gewählt, bei dem der analoge Wellenzug (W1) die größte Flankensteilheit aufweist.

9. Verfahren nach einem der Ansprüche 1 bis 8, **gekennzeichnet durch** das Merkmal:
- die Messung der ersten Zeitdauer (T1) erfolgt in Strömungsrichtung des Fluids.

10. Verfahren nach einem der Ansprüche 1 bis 9, **gekennzeichnet durch** das Merkmal:
- anstelle der Differenzbildung zwischen der ersten und zweiten Zeitdauer (T1, T2) wird die Differenzzeit (Td) zwischen der Torzeit (T_{Gate}) und dem ersten danach detektierten Puls des Pulszugs (D2) direkt gemessen.

11. Vorrichtung zur Durchführung des Verfahrens nach wenigstens einem der Ansprüche 1 bis 10, umfassend:
- einen Sendewandler (10),
- einen Empfangswandler (12),
- dazwischen eine Ultraschall-Messtrecke (11),
- einen Generator (3) zur Erzeugung einer auf n (n>/1) begrenzten Anzahl von Anregungspulsen (Burst 1, Burst 2),
- eine Referenzspannung (U_{ref}),
- einen Empfangsverstärker,
- einen Komparator (5),
- einen Zähler (4),
- eine Zeitmesseinrichtung (1)
- und eine Steuer- und Verarbeitungseinrichtung (2),
**gekennzeichnet durch** die Merkmale:
- die Steuer- und Verarbeitungseinrichtung (2) umfasst
- eine Speichereinheit zum Zwischenspeichern der ersten und zweiten Zeitdauer (T1, T2),
- eine Torschaltung, die erst nach Ablauf einer Torzeit (T_{Gate}), die direkt mit der zwischengespeicherten ersten Zeitdauer (T1) verknüpft ist, geöffnet wird,
- und einen Umschalter (A1, A2, A3, A4), der die Wandler (10, 12) abwechselnd mit dem Generator (3) bzw. dem Empfangsverstärker verbindet.

## Claims

1. A method for measuring the flow velocity (v) of fluids in accordance with the transit time difference method, comprising the features:
- transmission of an ultrasonic measuring path (11) between two ultrasonic transducers (10,12) in a forward direction,
- exciting for this purpose the transmitting transducer (10) with a number limited to n (n ≥ 1) of excitation pulses (Burst 1) for emitting an ultrasonic wave train,
- registering the ultrasonic wave train from the receiving transducer (12) as an analogue signal train (W1),
- digitising the signal train (W1) to form a pulse train (D1),
- and measuring a first time period (T1) between a particular pulse of the excitation pulses (Burst 1) and a k-th (k ≥1) pulse of the pulse train (01),
**characterised by** the features:
- exciting the receiving transducer (12) with a number limited to n of excitation pulses (Burst 2) of the same frequency for emitting an ultrasonic wave train,
- registering the ultrasonic wave train from the transmitting transducer (10) as an analogue signal train (W2),
- digitising the signal train (W2) as a pulse train (D2),
- measuring a second time period (T2) between a particular pulse of the excitation pulses (Burst 2) and the first pulse of the pulse train (D2), which is detected after expiration of a gate time (T_{Gate}) which is in a fixed relationship with the first time period (T1),
- forming a time difference (ΔT) between the first and second time periods (T1,T2),
- calculating the flow velocity (v) by means of the detected time difference (ΔT).

2. A method according to Claim 1, **characterised by** the feature:
- the gate time (T_{Gate}) is equal to the measured first time period (T1).

3. A method according to Claim 1, **characterised by** the feature:
- to form the gate time (T_{Gate}) the first measured time period (T1) is shortened by an amount T(_{Subgate}) which is smaller than one period duration of the excitation pulses (Burst 1, Burst 2).

4. A method according to Claim 3, **characterised by** the feature:
- the amount (T_{subgate}) of the shortening corresponds to one eighth of the period duration.

5. A method according to any one of Claims 1 to 4, **characterised by** the feature:
- the measurements of the first and second time periods (T1,T2) begin with the respective same pulse of the excitation pulses (Burst 1, Burst 2).

6. A method according to Claim 5 **characterised by** the feature:
- the measurements begin with the first or last pulse of the excitation pulses (Burst 1, Burst 2).

7. A method according to any one of Claims 1 to 6, **characterised by** the feature:
- as k-th pulse of the pulse train (D1) the pulse is selected in which the analogue wave train (W1) has the greatest amplitude.

8. A method according to any one of Claims 1 to 6, **characterised by** the feature:
- as k-th pulse of the pulse train (D1) the pulse is selected in which the analogue wave train (W1) has the greatest edge steepness.

9. A method according to any one of Claims 1 to 8, **characterised by** the feature:
- the measurement of the first time period (T1) takes place in the flow direction of the fluid.

10. A method according to any one of Claims 1 to 9, **characterised by** the feature:
- instead of forming the difference between the first and second time periods (T1,T2), the differential time (Td) between the gate time (T_{Gate}) and the first pulse of the pulse train (D1) detected thereafter is directly measured.

11. An apparatus for carrying out the method according to at least one of Claims 1 to 10, comprising:
- a transmitting transducer (10),
- a receiving transducer (12),
- an ultrasonic measuring path (11) between them,
- a generator (3) for generating a number limited to n (n ≥/1) of excitation pulses (Burst 1, Burst 2),
- a reference voltage (U_{ref}),
- a receiving amplifier,
- a comparator (5),
- a counter (4),
- a timing device (1)
- and a control and processing device (2),
**characterised by** the features:
- the control and processing device (2) comprises
- a memory unit for temporarily storing the first and second time periods (T1,T2),
- a gate circuit which is opened only after expiration of a gate time (T_{Gate}) which is directly linked with the temporarily stored first time period (T1),
- and a change-over switch (A1,A2,A3,A4) which connects the transducers (10,12) alternately to the generator (3) and the receiving amplifier.

## Revendications

1. Procédé de mesure de la vitesse d'écoulement (v) de fluides selon le procédé de la différence des temps de parcours, comprenant les caractéristiques :
- exposition à un rayonnement d'une section de mesure ultrasonore (11) entre deux transducteurs ultrasonores (10, 12) en sens direct,
- à cet effet, excitation du transducteur d'émission (10) par un nombre limité à n (n ≥ 1) d'impulsions d'excitation (Burst 1) pour l'envoi d'un train d'ondes ultrasonores,
- détection du train d'ondes ultrasonores par le transducteur de réception (12) sous la forme d'un train de signaux analogique (W1),
- numérisation du train de signaux (W1) en un train d'impulsions (D1),
- et mesure d'une première durée (T1) entre une impulsion définie des impulsions d'excitation (Burst 1) et une k^{éme} (k > 1) impulsion du train d'impulsions (D1),
**caractérisé par** les caractéristiques suivantes :
- excitation du transducteur de réception (12) par un nombre limité à n d'impulsions d'excitation de même fréquence (Burst 2) pour l'envoi d'un train d'ondes ultrasonores,
- détection du train d'ondes ultrasonores par le transducteur d'émission (10) sous la forme d'un train de signaux analogique (W2),
- numérisation du train de signaux (W2) en un train d'impulsions (D2),
- mesure d'une deuxième durée (T2) entre une impulsion définie des impulsions d'excitation (Burst 2) et la première impulsion du train d'impulsions (D2) qui est détectée après expiration d'un temps de porte (T_{Gate}) en relation fixe avec le premier intervalle de temps (T1),
- formation de la différence de temps (ΔT) entre la première et la deuxième durée (T1, T2),
- calcul de la vitesse d'écoulement (v) à l'aide de la différence de temps (ΔT) déterminée.

2. Procédé selon la revendication 1, **caractérisé par** la caractéristique suivante :
- le temps de porte (T_{Gate}) est égal à la première durée mesurée (T1).

3. Procédé selon la revendication 1, **caractérisé par** la caractéristique suivante :
- pour former le temps de porte (T_{Gate}), la première durée mesurée (T1) est raccourcie d'un montant (T_{Subgate}) qui est plus petit qu'une durée de période des impulsions d'excitation (Burst 1, Burst 2).

4. Procédé selon la revendication 3, **caractérisé par** la caractéristique suivante :
- le montant (T_{subgate}) du raccourcissement correspond à un huitième de la durée de période.

5. Procédé selon une des revendications 1 à 4, **caractérisé par** la caractéristique suivante :
- les mesures de la première et de la deuxième durée (T1, T2) commencent par la même impulsion des impulsions d'excitation (Burst 1, Burst 2).

6. Procédé selon la revendication 5, **caractérisé par** la caractéristique suivante :
- les mesures commencent par la première ou la dernière impulsion des impulsions d'excitation (Burst 1, Burst 2).

7. Procédé selon une des revendications 1 à 6, **caractérisé par** la caractéristique suivante :
- l'impulsion pour laquelle le train d'ondes analogique (W1) présente la plus grande amplitude est choisie comme k^{ème} impulsion du train d'impulsions (D1).

8. Procédé selon une des revendications 1 à 6, **caractérisé par** la caractéristique suivante :
- l'impulsion pour laquelle le train d'ondes analogique (W1) présente la plus grande raideur de flanc est choisie comme k^{ème} impulsion du train d'impulsions (D1).

9. Procédé selon une des revendications 1 à 8, **caractérisé par** la caractéristique suivante :
- la mesure de la première durée (T1) est effectuée dans le sens d'écoulement du fluide.

10. Procédé selon une des revendications 1 à 9, **caractérisé par** la caractéristique suivante :
- au lieu de former la différence entre la première et la deuxième durée (T1, T2), on mesure directement la différence de temps (Td) entre le temps de porte (T_{Gate}) et la première impulsion du train d'impulsions (D2) détectée après.

11. Dispositif pour réaliser le procédé selon au moins une des revendications 1 à 10, comprenant :
- un transducteur d'émission (10),
- un transducteur de réception (12),
- entre les deux une section de mesure ultrasonore (11),
- un générateur (3) pour générer un nombre limité à n (n ≥ 1) d'impulsions d'excitation (Burst 1, Burst 2),
- une tension de référence (U_{ref}),
- un amplificateur de réception,
- un comparateur (5),
- un compteur (4),
- un dispositif de mesure de temps (1)
- et un dispositif de commande et de traitement (2),
**caractérisé par** les caractéristiques suivantes :
- le dispositif de commande et de traitement (2) comprend
- une unité de mémoire pour le stockage temporaire de la première et de la deuxième durée (T1, T2),
- un circuit de porte qui est ouvert seulement après expiration d'un temps de porte (T_{Gate}) qui est directement lié à la première durée (T1) stockée temporairement,
- et un commutateur (A1, A2, A3, A4) qui relie les transducteurs (10, 12) alternativement au générateur (3) et à l'amplificateur de réception.
